# EUROPÄISCHE PATENTSCHRIFT

(11) **EP 1 033 288 B1**
(45) Veröffentlichungstag und Bekanntmachung des Hinweises auf die Patenterteilung: **15.04.2009**
(21) Anmeldenummer: 00103268.9
(22) Anmeldetag: 17.02.2000
(51) Int. Cl.: B60R 16/02, H02H 3/02, H01H 71/56, H01H 3/42, H01H 1/38

(54) **Sicherungssystem für Kraftfahrzeuge**
Fuse system for motor vehicles
Système de fusible pour véhicules à moteur

(30) Priorität: 04.03.1999 DE 19909591
(43) Veröffentlichungstag der Anmeldung: 06.09.2000
(73) Patentinhaber: Delphi Technologies, Inc., Troy, MI 48007 (US)
(72) Erfinder: Alksnat, Holger, 58285 Gevelsberg (DE); Brake, Jens, 42349 Wuppertal (DE); Dinger, Jürgen, 42899 Remscheid (DE)
(74) Vertreter: Denton, Michael John

(56) Entgegenhaltungen:
- DE-A- 4 208 011
- DE-A- 19 704 166
- FR-A- 1 385 082
- GB-A- 1 169 348

## Beschreibung

Die Erfindung betrifft ein Sicherungssystem zur Absicherung von an eine Stromquelle angeschlossenen elektrischen Bauteilen für Kraftfahrzeuge nach dem Oberbegriff des Anspruchs 1. Ein derartiges Sicherungssystem ist aus der DE 19 704 166 A bekannt.

Sicherungssysteme zur Absicherung elektrischer Leitungssysteme bzw. elektrischer Verbraucher gegen zu hohe Ströme sind grundsätzlich bekannt. In Kraftfahrzeugen werden üblicherweise Schmelzsicherungen eingesetzt, die einzeln auswechselbar in einem Sicherungskasten angeordnet sind.

Aus der FR-A-1 238 546 ist ferner ein als Druckgasschalter mit einer Trennschaltstelle und einer mit dieser in Reihe liegenden Leistungsschaltstelle ausgeführter Lasttrennschalter bekannt.

Es ist das der Erfindung zugrundeliegende Problem (Aufgabe), ein eine optimale Absicherung bietendes Sicherungssystem zu schaffen, das variabel und vielseitig einsetzbar ist.

Die Lösung dieser Aufgabe erfolgt durch die Merkmale des Anspruchs 1.

Durch die Erfindung wird ein intelligentes Sicherungssystem geschaffen, bei dem der elektrische Leiter gezielt dann unterbrochen werden kann, wenn die jeweiligen Betriebszustände es erfordern. Erfindungsgemäß kann mit der Stellvorrichtung der elektrische Leiter unabhängig von seinen Eigenschaften, beispielsweise von dem Material, aus dem er besteht, und seinem Querschnitt, unterbrochen werden. Des weiteren wird durch die Erfindung die Möglichkeit geschaffen, beliebige Betriebszustände der Umgebung, in welche das erfindungsgemäße Sicherungssystem integriert ist, zu berücksichtigen, indem die Betätigungseinheit entsprechend angesteuert wird.

Ein weiterer Vorteil der Erfindung besteht darin, daß der Querschnitt von an den elektrischen Leiter angeschlossenen Kabeln besser an die zu erwartenden Bedingungen angepaßt werden kann und nicht überdimensioniert zu werden braucht. In Verbindung mit herkömmlichen Sicherungssystemen werden unnötig große Kabelquerschnitte benötigt, damit die herkömmliche Schmelzsicherung durchschmilzt, bevor das Kabel beschädigt wird. So werden beispielsweise in Verbindung mit 30 A-Sicherungen Leitungen verwendet, die für etwa 40 A ausgelegt sind, obwohl derartige Ströme im normalen Betrieb nicht auftreten. Da erfindungsgemäß der elektrische Leiter unabhängig von dem durch ihn fließenden Strom unterbrechbar ist, kann dafür gesorgt werden, daß der Leiter unterbrochen wird, sobald die maximale Belastbarkeit der angeschlossenen Kabel erreicht ist. Die Erfindung ermöglicht so eine wirtschaftlichere Herstellung von elektrischen Leitungssystemen, beispielsweise in Bordnetzen von Kraftfahrzeugen.

Durch die erfindungsgemäße Wiederherstellbarkeit der elektrischen Verbindung kann das Sicherungssystem nach einem Auslösen wiederverwendet werden. Dies eröffnet die vorteilhafte Möglichkeit, für bestimmte Situationen die bestehende elektrische Verbindung vorübergehend zu unterbrechen und zu einem beliebigen späteren Zeitpunkt wiederherzustellen. Wenn das erfindungsgemäße Sicherungssystem in einem Kraftfahrzeug eingesetzt wird, dann können die an den Leiter angeschlossenen elektrischen Bauteile bei einem längeren Stillstand des Fahrzeugs, beispielsweise während eines Transports oder wenn am Fahrzeug Reparaturen durchgeführt werden, vorübergehend von der Fahrzeugbatterie getrennt werden.

Gemäß einer bevorzugten Ausführungsform der Erfindung ist die Verbindung beliebig oft unterbrechbar und wiederherstellbar.

Auf diese Weise kann die volle Funktionsfähigkeit des erfindungsgemäßen Sicherungssystems auch bei einem häufigen automatischen oder absichtlichen Auslösen über einen langen Zeitraum, insbesondere über die gesamte Lebensdauer eines Kraftfahrzeuges, aufrechterhalten werden, ohne einzelne Bauteile auswechseln zu müssen.

Gemäß einem weiteren bevorzugten Ausführungsbeispiel der Erfindung ist die Verbindung mittels der Stellvorrichtung wiederherstellbar.

Indem die zum Unterbrechen des Leiters vorgesehene Vorrichtung gleichzeitig auch zum Wiederherstellen der unterbrochenen Verbindung dient, wird die Möglichkeit für ein Sicherungssystem mit einfachem Aufbau und geringem Platzbedarf geschaffen.

Gemäß einer weiteren bevorzugten Ausführungsform der Erfindung umfaßt der Leiter wenigstens ein beweglich gelagertes, in Längsrichtung des Leiters verschiebbares Kontaktelement.

Die Unterbrechung und Wiederherstellung der elektrischen Verbindung kann hierbei jeweils durch Verschieben des Kontaktelementes erfolgen. Das erfindungsgemäße Sicherungssystem kann hierdurch in einer platzsparenden und gleichzeitig eine gute elektrische Kontaktierung ermöglichenden Weise ausgeführt werden. Besonders vorteilhaft ist es, wenn der Leiter zwei voneinander beabstandete Kontaktabschnitte umfaßt, die mit dem Kontaktelement überbrückbar sind. Im unterbrochenen Zustand sorgt hierbei der Abstand zwischen den beiden Kontaktabschnitten für eine sichere Trennung des oder der an den einen Kontaktabschnitt angeschlossenen Bauteile von der mit dem anderen Kontaktabschnitt verbundenen Stromquelle. Bei Verwendung zylindrischer Kontaktabschnitte kann mit einer auf die Kontaktabschnitte schiebbaren hohlzylindrischen Kontakthülse eine besonders sichere Verbindung sowohl in mechanischer als auch in elektrischer Hinsicht zwischen Stromquelle und Verbraucher geschaffen werden, die außerdem eine einfache Unterbrechung der Verbindung durch Verschieben der Kontakthülse ermöglicht.

Gemäß einer weiteren bevorzugten Ausführungsform der Erfindung ist der Leiter als Schmelzsicherung ausgebildet.

Hierdurch kann von dem erfindungsgemäßen Sicherungssystem sowohl die Funktion einer herkömmlichen Schmelzsicherung erfüllt als auch - mit Hilfe der Stellvorrichtung - für eine zusätzliche Absicherungsmöglichkeit gesorgt werden, die von den elektrischen Leiter durchfließenden und diesen ab einer bestimmten Stromstärke zum Schmelzen bringenden Strömen unabhängig ist.

Gemäß einer weiteren bevorzugten Ausführungsform der Erfindung umfaßt die Betätigungseinheit wenigstens einen Betätigungsabschnitt, der zur Betätigung eines Kontaktelementes des Leiters um eine etwa senkrecht zum Leiter verlaufende Drehachse drehbar ist.

Durch das Vorsehen einer Drehbewegung zum Betätigen des Kontaktelementes kann eine kompakte Bauweise des erfindungsgemäßen Sicherungssystems erzielt werden.

Gemäß einer bevorzugten Variante ist die Betätigungseinheit mit einer automatischen Kupplungsfunktion versehen, durch welche die kraftschlüssige Verbindung zu einem Kontaktelement bei Erreichen von dessen Endstellungen unterbrechbar ist.

Die Drehbewegung zum Betätigen des Kontaktelementes braucht somit nicht beendet zu werden, wenn die jeweilige Endstellung des Kontaktelementes erreicht, d.h. der Leiter bzw. die elektrische Verbindung vollständig unterbrochen bzw. wiederhergestellt ist. Von besonderen Vorteil ist dies dann, wenn gemäß einem weiteren bevorzugten Ausführungsbeispiel der Erfindung der Leiter mehrere Einzelleiter umfaßt, die unabhängig voneinander unterbrechbar sind, und jedem Einzelleiter ein Kontaktelement und ein Betätigungsabschnitt zur Betätigung des Kontaktelementes zugeordnet ist. Wenn die einzelnen Betätigungsabschnitte auf einer gemeinsamen Antriebswelle angeordnet sind, dann ermöglicht es die automatische Kupplungsfunktion, nach Erreichen einer Endstellung eines Kontaktelementes die Drehbewegung fortzuführen, um einen einem anderen Kontaktelement zugeordneten Betätigungsabschnitt gezielt zu positionieren. Durch die Kupplungsfunktion kann somit eine flexiblere Steuerung der Betätigungseinheit und insbesondere ein schnelleres gezieltes Ansprechen einzelner Betätigungsabschnitte und somit Einzelleiter erfolgen.

Durch das Vorsehen mehrerer Einzelleiter können einzelne Abschnitte beispielsweise eines KFZ-Bordnetzes, einzelne elektrische Verbraucher oder zu Untersystemen zusammengefaßte elektrische Verbraucher unabhängig voneinander abgesichert werden. Dabei kann jedem Einzelleiter und somit jedem Leitungsabschnitt bzw. Verbraucher ein eigenes Absicherungsszenario zugeordnet werden, indem entsprechende Betriebszustände vorgegeben werden, bei denen eine Unterbrechung des jeweiligen Einzelleiters erfolgen soll.

Gemäß einer weiteren bevorzugten Ausführungsform der Erfindung ist die Stellvorrichtung zur Überwachung und insbesondere zum Erkennen von Überlastzuständen eines den Leiter enthaltenden Leitungssystems ausgebildet.

Auf diese Weise kann ein den unterbrechbaren elektrischen Leiter enthaltendes Leitungssystem an einer beliebigen Stelle und insbesondere an einer Vielzahl von beliebigen Stellen überwacht werden, um gegebenenfalls die Betätigungseinheit zu aktivieren und somit für eine Unterbrechung des elektrischen Leiters zu sorgen. Hierzu kann eine zentrale Steuereinheit vorgesehen sein, welche die jeweiligen Betriebszustände an den zu überwachenden Stellen des Leitungssystems, z.B. dem Bordnetz eines Kraftfahrzeuges, erfaßt und die Betätigungseinheit zum Unterbrechen des elektrischen Leiters ansteuert, wenn - z.B. im Fall von Kurzschlüssen - eine Absicherung erforderlich ist. Hierbei kann die Steuereinheit zur Erzeugung von Stellsignalen ausgebildet sein, die in Abhängigkeit von den von der Steuereinheit erfaßten Betriebszuständen erzeugt und an die im Bereich des elektrischen Leiters angeordnete Betätigungseinheit der Stellvorrichtung übermittelt werden. Sobald die Steuereinheit wieder einen normalen Betriebszustand erkennt, kann die Betätigungseinheit dazu veranlaßt werden, den Unterbrechungszustand aufzuheben, um die volle Funktionsfähigkeit des Kraftfahrzeuges wiederherzustellen.

Gemäß einem weiteren bevorzugten Ausführungsbeispiel der Erfindung ist die Stellvorrichtung in Abhängigkeit von vorgebbaren Betriebszuständen entsprechenden Werten aktivierbar, die in der Stellvorrichtung gespeichert und insbesondere durch Programmieren der Stellvorrichtung veränderbar sind.

Auf diese Weise können bestimmte Szenarien vorgegeben werden, bei deren Vorliegen automatisch die Betätigungseinheit aktiviert und somit der elektrische Leiter unterbrochen bzw. die Unterbrechung wieder aufgehoben wird. Die in der Stellvorrichtung gespeicherten Werte können beispielsweise maximale Ströme darstellen, die an bestimmten, von der Steuereinheit überwachten Stellen eines den elektrischen Leiter enthaltenden Leitungssystems nicht überschritten werden dürfen. Durch das Vorsehen einer programmierbaren Stellvorrichtung können die Werte und somit die Bedingungen, unter denen eine Absicherung durch Unterbrechen des elektrischen Leiters bzw. eine Wiederaufnahme des Betriebs des oder der angeschlossenen Bauteile durch Wiederherstellen der elektrischen Verbindung erfolgt, auf einfache Weise und insbesondere ohne Auswechseln einzelner Sicherungen geändert werden. Dadurch ist das erfindungsgemäße Sicherungssystem besonders variabel und vielseitig einsetzbar. Es kann somit die gleiche, den elektrischen Leiter und die Stellvorrichtung umfassende Hardware für die verschiedensten Umgebungen genutzt werden.

Gemäß einer weiteren bevorzugten Ausführungsform der Erfindung, welche den Einsatz des Sicherungssystems in Kraftfahrzeugen betrifft, ist die Stellvorrichtung zur Erfassung von Betriebsstörungen, insbesondere von Unfällen, des Kraftfahrzeuges ausgebildet.

Hierdurch können einzelne Abschnitte des Bordnetzes bzw. einzelne Verbraucher im Kraftfahrzeug bei einem Unfall sofort und gezielt durch Unterbrechen des jeweiligen elektrischen Leiters automatisch abgeschaltet werden. Auf diese Weise kann beispielsweise verhindert werden, daß auslaufender Kraftstoff bzw. Kraftstoffdämpfe durch noch aktive elektrische Bauteile entzündet werden. Diese zusätzliche Schutzfunktion kann erfindungsgemäß unabhängig von den den elektrischen Leiter durchfließenden Strömen bereitgestellt werden. Bei weniger schweren Unfällen kann durch die erfindungsgemäße Wiederherstellbarkeit der elektrischen Verbindung der aufgrund des Unfalls abgeschaltete Systemabschnitt automatisch wieder zugeschaltet werden, um die volle Funktionsfähigkeit des Kraftfahrzeuges sicherzustellen.

Gemäß einer bevorzugten Variante ist die Stellvorrichtung zur Kommunikation mit einer Rückhalteeinrichtung, insbesondere mit einem Airbag-System, ausgelegt. Die das Auslösen eines Airbags bewirkenden Signale können somit gleichzeitig an die Stellvorrichtung des erfindungsgemäßen Sicherungssystems übermittelt werden, um auf diese Weise bei einem Unfall für die Trennung des jeweiligen Leitungsabschnitts bzw. elektrischen Verbrauchers von der Stromquelle zu sorgen.

Es ist auch möglich, die Stellvorrichtung manuell aktivierbar auszubilden, indem beispielsweise eine Bedieneinheit vorgesehen wird, über welche der Kraftfahrzeugführer den Leiter bzw. bestimmte Einzelleiter gezielt und zu einem beliebigen Zeitpunkt unterbrechen bzw. die Unterbrechung wieder aufheben kann.

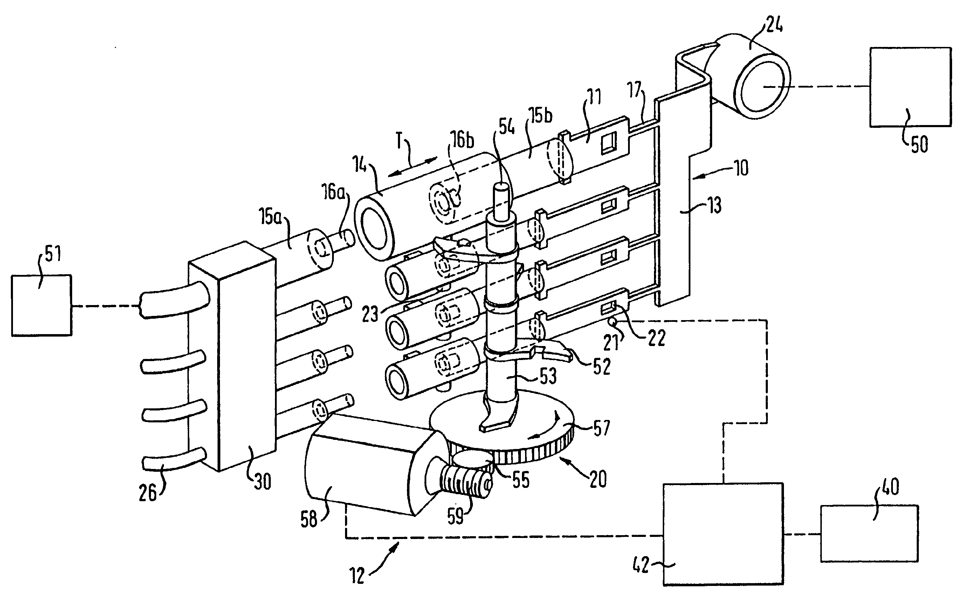

Weitere Ausführungsformen der Erfindung sind in den Unteransprüchen, der Beschreibung sowie der Zeichnung angegeben.

Die Erfindung wird im folgenden beispielhaft unter Bezugnahme auf die Zeichnung beschrieben, deren einzige Figur eine perspektivische und teilweise schematische Ansicht eines Sicherungssystems gemäß einer Ausführungsform der Erfindung zeigt.

Das erfindungsgemäße Sicherungssystem umfaßt eine Stellvorrichtung 12 mit einer nachfolgend näher beschriebenen Betätigungseinheit 20, die mit einer elektronischen Steuereinheit 42 verbunden ist. Die Steuereinheit 42 kann mit einer Rückhalteeinrichtung eines nicht dargestellten Kraftfahrzeuges kommunizieren, beispielsweise mit einem in der Figur lediglich schematisch dargestellten Airbag-System 40 oder einem Gurtstraffer.

Des weiteren umfaßt das Sicherungssystem einen elektrischen Leiter 10, der einen streifenförmigen Hauptleiter 13 sowie in dieser Ausführungsform vier streifenförmige Einzelleiter 11 aufweist, die wie die Zinken eines Kammes von einer Längsseite des Hauptleiters 13 ausgehen und jeweils senkrecht zum Hauptleiter 13 verlaufen.

Auf seiner von den Einzelleitern 11 abgewandten Längsseite ist der Hauptleiter 13 mit einem Anschlußabschnitt 24 versehen, mit welchem der Leiter 10 an eine Fahrzeugbatterie 50 anschließbar ist.

Der Bereich des Leiters 10 bis zu nachfolgend näher erläuterten zylindrischen Kontaktabschnitten 15b ist als einstückiges Stanz-/Biegeteil ausgeführt, welches aus einem die jeweils gewünschte Dicke aufweisenden tafelförmigen Ausgangsmaterial erhalten wird. Die Verbindung zwischen dem Hauptleiter 13 und den Einzelleitern 11 erfolgt durch schmale Stege 17, deren Breite in der Größenordnung der Dicke des elektrischen Leiters 10 liegt. Die Stege 17 sind in Abhängigkeit insbesondere von dem Material des Leiters 10 derart bemessen, daß sie durchschmelzen, sobald der durch den betreffenden Einzelleiter 11 fließende Strom eine bestimmte Stromstärke übersteigt. Jeder Einzelleiter 11 stellt somit eine Schmelzsicherung dar. Die Verbindung zwischen den Kontaktabschnitten 15b und dem streifenförmigen Abschnitt der Einzelleiter 11 ist in der Figur lediglich schematisch dargestellt und kann auf geeignete Weise z.B. durch Verlöten oder Verschweißen erfolgen.

Zusätzlich zu dem mit dem einstückigen Abschnitt des Leiters 10 verbundenen Kontaktabschnitt 15b umfaßt jeder Einzelleiter 11 einen weiteren zylindrischen Kontaktabschnitt 15a, der mit einem gemeinsamen Mehrwege-Verbinder 30 verbunden ist. Über den Verbinder 30 sind elektrische Bauteile, z.B. einzelne Leitungsabschnitte des KFZ-Bordnetzes, einzelne elektrische Verbraucher oder zu einzelnen Einheiten zusammengefaßte elektrische Verbraucher jeweils über eine Leitung 26 mit den Einzelleitern 11 verbindbar. In der Figur ist beispielhaft ein elektrisches Bauteil 51 angedeutet. Der elektrische Leiter 10 dient somit als Stromverteiler, über den die einzelnen elektrischen Bauteile 51 mit Strom versorgt werden. Der Hauptleiter 13 wird auch als "Terminal-Busbar", d.h. als streifenförmiger Anschluß-Bus bezeichnet, durch den die Einzelleiter 11 zentral mit Strom versorgt werden.

Die Kontaktabschnitte 15a und 15b jedes Einzelleiters 11 sind voneinander beabstandet angeordnet, wobei der Zwischenraum mittels einer hohlzylindrischen Kontakthülse 14 überbrückt werden kann, die in Längsrichtung der Einzelleiter 11 relativ zu den Kontaktabschnitten 15a, 15b verschiebbar ist, wie es durch den Doppelpfeil T in der Figur angedeutet ist. Der Innendurchmesser jeder Kontakthülse 14 entspricht dem Außendurchmesser der zylindrischen Kontaktabschnitte 15a, 15b. Auf diese Weise wird sowohl eine definierte mechanische Führung der Kontakthülsen 14 auf den Kontaktabschnitten 15a, 15b als auch ein guter elektrischer Kontakt zwischen der Kontakthülse 14 und den Kontaktabschnitten 15a, 15b gewährleistet, der auch für hohe Ströme geeignet ist, wie sie in Kraftfahrzeugen benötigt werden.

Durch Hin- und Herschieben der Kontakthülse 14 kann somit die elektrische Verbindung zwischen den beiden Kontaktabschnitten 15a, 15b unterbrochen und wiederhergestellt werden. Die mit dem Mehrwege-Verbinder 30 verbundenen Kontaktabschnitte 15a sind jeweils an ihrem freien Ende mit einem stiftförmigen Vorsprung 16a reduzierten Durchmessers versehen, der in eine entsprechende zylindrische Ausnehmung 16b in der Stirnseite des jeweiligen Kontaktabschnitts 15b paßt. Auf diese Weise kann die Einheit aus Verbinder 30, Leitungen 26 und Kontaktabschnitten 15a mit der auf der anderen Seite der Kontakthülsen 14 angeordneten Einheit zusammengesteckt werden, um gegebenenfalls eine direkte - auch durch Verschieben der Kontakthülsen 14 nicht aufhebbare - elektrische Verbindung zwischen dem Hauptleiter 13 und den Leitungen 26 über die jeweiligen Einzelleiter 11 herzustellen.

Der in der Figur obere Einzelleiter 11 ist für höhere Ströme ausgelegt als die drei unteren Einzelleiter 11, wie es in der Figur jeweils durch die größeren Querschnitte der Leitung 26, der Kontaktabschnitte 15a, 15b, der Kontakthülse 14 und des über den Steg 17 mit dem Hauptleiter 13 verbundenen streifenförmigen Abschnitts des oberen Einzelleiters 11 angedeutet ist.

Zum Verschieben der Kontakthülsen 14 ist die Betätigungseinheit 20 vorgesehen. Die Betätigungseinheit 20 umfaßt einen Elektromotor 58, dessen Ausgangswelle als Schnecke 59 ausgebildet ist, mit der über ein Schnekkenrad 55 ein Zahnrad 57 in beide Richtungen drehantreibbar ist, wie es durch den Doppelpfeil auf dem Zahnrad 57 angedeutet ist. Mit dem Zahnrad 57 ist eine sich senkrecht zu den Kontakthülsen 14 der Einzelleiter 11 erstreckende Antriebswelle 54 drehfest verbunden. Mit der Antriebswelle 54 sind jeweils als Schlepparme 52 ausgebildete Mitnehmer gekoppelt, die längs der Antriebswelle 54 beabstandet und jeweils in Höhe eines zylindrischen Ansatzes 23 auf der Außenseite der Kontakthülse 14 angeordnet sind. Die Schlepphebel 52 dienen als Betätigungsabschnitte der Betätigungseinheit 20 und weisen jeweils eine geringfügig gekrümmte Form auf. Oberhalb jedes Schlepphebels 52 ist eine zylindrische Hülse 53 angeordnet, die einstückig mit dem jeweiligen Schlepphebel 52 ausgebildet sein kann.

Durch Verändern der Länge der Antriebswelle 54 und der Anzahl von mit der Antriebswelle 54 gekoppelten Schlepphebeln 52 kann die Betätigungseinheit 20 auf einfache Weise an die Anzahl von Einzelleitern 11 angepaßt werden.

Die in Längsrichtung der Antriebswelle 54 beabstandeten Schlepphebel 52 sind um die durch die Antriebswelle 54 definierte Drehachse gegeneinander verdreht angeordnet, wobei der feste Verdrehwinkel zwischen zwei aufeinanderfolgenden Schlepphebeln 52 etwa 90° beträgt.

Durch Betätigen des in beide Drehrichtungen betreibbaren Elektromotors 58 kann die Antriebswelle 54 in die gewünschte Richtung gedreht werden, um die einzelnen Kontakthülsen 14 in die gewünschte Richtung zu verschieben, d.h. die Einzelleiter 11 zu unterbrechen oder eine Unterbrechung aufzuheben. Die Betätigungseinheit 20 ist mit einer automatischen Kupplungsfunktion versehen, durch welche die kraftschlüssige Verbindung zwischen der Betätigungseinheit 20 und den Kontakthülsen 14 unterbrochen wird, sobald die jeweilige Endstellung der Kontakthülse 14 erreicht ist. Die Kupplung kann beispielsweise zwischen der Antriebswelle 54 und den Schlepphebeln 52 vorgesehen werden und als Rutschkupplung ausgebildet sein, die für ein Auskuppeln eines Schlepphebels 52 sorgt, wenn der von der jeweiligen Kontakthülse 14 entgegengesetzte Widerstand einen bestimmten Wert übersteigt. Es ist auch möglich, die Schlepphebel 52 jeweils zweiteilig aus zwei gelenkig miteinander verbundenen Abschnitten auszubilden und die Verbindung zwischen den beiden Abschnitten derart auszulegen, daß der mit der Kontakthülse 14 zusammenwirkende Abschnitt gegenüber dem fest mit der Antriebswelle 54 verbundene Abschnitt abknicken kann, wenn ein bestimmter Widerstand überschritten wird. Auf diese Weise ist es möglich, einzelne Schlepphebel 52 über eine einer Endstellung der jeweiligen Kontakthülse 14 entsprechende Position hinaus zu verdrehen, um einen bestimmten Schlepphebel 52 so zu positionieren, daß dessen Kontakthülse 14 durch Umkehren der Drehrichtung verstellt werden kann.

Auf diese Weise kann jede Kontakthülse 14 in beide Richtungen verstellt werden, ohne die Stellung der anderen Kontakthülsen 14 zu verändern.

Die mit dem Elektromotor 58 verbundene Steuereinheit 42 des erfindungsgemäßen Sicherungssystems dient dazu, den Betriebszustand des Kraftfahrzeuges, in welches das erfindungsgemäße Sicherungssystem integriert ist, zu überwachen. Hierzu können an beliebigen Stellen des elektrischen Systems bzw. des KFZ-Bordnetzes zur Strommessung ausgebildete Sensoren vorgesehen sein, die von der Steuereinheit 42 zyklisch abgefragt werden. Im Fall von Überlastzuständen und/oder Kurzschlüssen können die betroffenen Abschnitte gezielt durch Übermittlung entsprechender, in der Steuereinheit 42 erzeugter Steuer- oder Stellsignale an den Elektromotor 58 von der über den Anschlußabschnitt 24 und den Hauptleiter 13 erfolgenden Stromversorgung abgeschnitten werden.

Wie in der Figur am Beispiel des unteren Einzelleiters 11 angedeutet, kann die Steuereinheit 42 außerdem zur Überwachung der durch die Einzelleiter 11 fließenden Ströme dienen. Des weiteren kann auch eine Temperaturmessung an den Einzelleitern 11 erfolgen. Der oder die hierfür erforderlichen Sensoren sind in der Figur durch den Sensor 21 angedeutet, der beispielsweise in einer rechteckigen Aussparung 22 des streifenförmigen Abschnitts des Einzelleiters 11 angeordnet werden kann.

Bei der Erfassung und Bewertung der Betriebszustände, die als Grundlage für eine mögliche Aussendung von Stellsignalen an den Elektromotor 58 zur Unterbrechung oder Wiederherstellung der einzelnen elektrischen Verbindungen dienen, kann des weiteren auch die Umgebungstemperatur, die beispielsweise jeweils mit einem nicht dargestellten Temperatursensor an der oder den interessierenden Stellen ermittelt wird, berücksichtigt werden.

Das erfindungsgemäße Sicherungssystem ist außerdem zur Erfassung einer weiteren Art von Betriebszuständen des Kraftfahrzeuges in der Lage, nämlich zum Erkennen von Unfällen. Diese können dem Sicherungssystem dadurch angezeigt werden, daß die Steuereinheit 42 mit einer Rückhalteeinrichtung des Kraftfahrzeuges für die Insassen kommunizieren kann, beispielsweise mit einem Gurtstraffer und/oder dem in der Figur lediglich angedeuteten Airbag-System 40. Die bei einer unfallbedingten Verzögerung des Kraftfahrzeuges von einer derartigen Rückhalteeinrichtung erzeugten bzw. verwendeten Signale werden an die Steuereinheit 42 übermittelt bzw. das Vorliegen derartiger Signale wird von der Steuereinheit 42 zyklisch abgefragt. Bei einem Unfall können somit alle oder gemäß einem vorbestimmten Schema ausgewählte Kontakthülsen 14 entsprechend verstellt werden, um durch Unterbrechen der elektrischen Verbindung zwischen der jeweiligen Kontakthülse 14 und dem Kontaktabschnitt 15a die an die jeweilige Leitung 26 angeschlossene elektrische Einheit 51 von der Stromversorgung abzuschneiden. Das Entzünden von Kraftstoff oder Kraftstoffdämpfen durch die Bordelektrik kann auf diese Weise automatisch verhindert werden.

### Bezugszeichenliste

- 10: Leiter
- 11: Einzelleiter
- 12: Stellvorrichtung
- 13: Hauptleiter
- 14: Kontaktelement, Kontakthülse
- 15a, 15b: Kontaktabschnitte
- 16a: Vorsprung
- 16b: Ausnehmung
- 17: Steg
- 20: Betätigungseinheit
- 21: Sensor
- 22: Aussparung
- 23: Ansatz
- 24: Anschlußabschnitt
- 26: Leitung
- 30: Verbinder
- 40: Airbag-System
- 42: Steuereinheit
- 50: Stromquelle
- 51: elektrisches Bauteil
- 52: Betätigungsabschnitt, Schlepphebel
- 53: Hülse
- 54: Antriebswelle
- 55: Schneckenrad
- 57: Zahnrad
- 58: Elektromotor
- 59: Schnecke

- T: Stellrichtungen

## Patentansprüche

1. Sicherungssystem zur Absicherung von an eine Stromquelle (50) angeschlossenen elektrischen Bauteilen (51) für Kraftfahrzeuge mit wenigstens einem elektrischen Leiter (10) und zumindest einer Stellvorrichtung (12), die eine ansteuerbare und im Bereich des Leiters (10) angeordnete Betätigungseinheit (20) zum Unterbrechen des Leiters (10) in Abhängigkeit von vorgebbaren Betriebszuständen aufweist, wobei die unterbrochene Verbindung wiederherstellbar ist,
**dadurch gekennzeichnet,**
**daß** die Betätigungseinheit (20) mehrere Betätigungsabschnitte (52) umfaßt, und
**daß** der Leiter (10) mehrere Einzelleiter (11) umfaßt, die unabhängig voneinander unterbrechbar sind, wobei jedem Einzelleiter (11) ein Kontaktelement (14) und ein Betätigungsabschnitt (52) zur Betätigung des Kontaktelementes (14) zugeordnet ist.

2. Sicherungssystem nach Anspruch 1,
**dadurch gekennzeichnet, daß** die Verbindung beliebig oft unterbrechbar und wiederherstellbar ist.

3. Sicherungssystem nach Anspruch 1 oder 2,
**dadurch gekennzeichnet, daß** die Verbindung mittels der Stellvorrichtung (12) wiederherstellbar ist.

4. Sicherungssystem nach zumindest einem der vorhergehenden Ansprüche,
**dadurch gekennzeichnet, daß** der Leiter (10) wenigstens ein beweglich gelagertes, insbesondere in Längsrichtung des Leiters (10) verschiebbares Kontaktelement (14) umfaßt.

5. Sicherungssystem nach Anspruch 4,
**dadurch gekennzeichnet, daß** das Kontaktelement (14) als separates und mit der Betätigungseinheit (20) betätigbares Bauteil ausgebildet ist.

6. Sicherungssystem nach Anspruch 4 oder 5,
**dadurch gekennzeichnet, daß** der Leiter (10) zwei voneinander beabstandete Kontaktabschnitte (15a, 15b) umfaßt, die mit dem Kontaktelement (14) überbrückbar sind.

7. Sicherungssystem nach zumindest einem der Ansprüche 4 bis 6,
**dadurch gekennzeichnet, daß** das Kontaktelement als auf bevorzugt etwa zylindrische Kontaktabschnitte (15a, 15b) des Leiters (10) auf schiebbare Kontakthülse (14) ausgebildet ist.

8. Sicherungssystem nach zumindest einem der vorhergehenden Ansprüche,
**dadurch gekennzeichnet, daß** der Leiter (10) als Schmelzsicherung ausgebildet ist.

9. Sicherungssystem nach zumindest einem der vorhergehenden Ansprüche,
**dadurch gekennzeichnet, daß** die Betätigungseinheit (20) der Stellvorrichtung (12) wenigstens einen Betätigungsabschnitt (52) umfaßt, der zur Betätigung eines Kontaktelementes (14) des Leiters (10) um eine etwa senkrecht zum Leiter (10) verlaufende Drehachse drehbar ist.

10. Sicherungssystem nach Anspruch 9,
**dadurch gekennzeichnet, daß** der Betätigungsabschnitt als insbesondere in Form eines Schlepphebels (52) vorgesehener Mitnehmer ausgebildet ist, der drehfest mit einer Antriebswelle (54) verbunden ist und bevorzugt etwa senkrecht von der Antriebswelle (54) absteht.

11. Sicherungssystem nach Anspruch 9 oder 10,
**dadurch gekennzeichnet, daß** die Antriebswelle (54) über ein Getriebe (55, 57, 59), bevorzugt ein Schneckengetriebe, mittels eines Elektromotors (58) drehantreibbar ist.

12. Sicherungssystem nach zumindest einem der vorhergehenden Ansprüche,
**dadurch gekennzeichnet, daß** die Betätigungseinheit (20) mit einer automatischen Kupplungsfunktion versehen ist, durch welche die kraftschlüssige Verbindung zu einem Kontaktelement (14) bei Erreichen von dessen Endstellungen unterbrechbar ist.

13. Sicherungssystem nach zumindest einem der Ansprüche 9 bis 12,
**dadurch gekennzeichnet, daß** mehrere Betätigungsabschnitte (52) längs der Drehachse verteilt und um die Drehachse gegeneinander verdreht angeordnet sind, wobei bevorzugt der Verdrehwinkel zwischen zwei aufeinanderfolgenden Betätigungsabschnitten (52) etwa 360°/n beträgt, wenn n die Anzahl der Einzelleiter (11) ist.

14. Sicherungssystem nach zumindest einem der vorhergehenden Ansprüche,
**dadurch gekennzeichnet, daß** der Leiter (10) als Stromverteiler ausgebildet ist und mehrere mit wenigstens einem gemeinsamen Hauptleiter (13) verbundene Einzelleiter (11) umfaßt, wobei bevorzugt der Hauptleiter (13) und die Einzelleiter (11) jeweils zumindest im wesentlichen streifenförmig ausgebildet sind.

15. Sicherungssystem nach zumindest einem der vorhergehenden Ansprüche,
**dadurch gekennzeichnet, daß** die Stellvorrichtung (12) eine Steuereinheit (42) zur Erfassung der Betriebszustände und zur Ansteuerung der Betätigungseinheit (20) umfaßt.

16. Sicherungssystem nach Anspruch 15,
**dadurch gekennzeichnet, daß** die Steuereinheit (42) zur Übermittlung von in Abhängigkeit von den Betriebszuständen erzeugten Stellsignalen an die Betätigungseinheit (20) ausgebildet ist.

17. Sicherungssystem nach zumindest einem der vorhergehenden Ansprüche,
**dadurch gekennzeichnet, daß** die Stellvorrichtung (12) zur Überwachung und insbesondere zum Erkennen von Überlastzuständen eines den Leiter (10) enthaltenden Leitungssystems ausgebildet ist.

18. Sicherungssystem nach zumindest einem der vorhergehenden Ansprüche,
**dadurch gekennzeichnet, daß** die Stellvorrichtung (12) zur Überwachung von den Leiter (10) durchfließenden Strömen und/oder der Temperatur des Leiters (10) insbesondere im Bereich einer vorgegebenen Trennstelle ausgebildet ist.

19. Sicherungssystem nach zumindest einem der vorhergehenden Ansprüche,
**dadurch gekennzeichnet, daß** die Stellvorrichtung (12) in Abhängigkeit von vorgebbaren Betriebszuständen entsprechenden Werten aktivierbar ist, die in der Stellvorrichtung (12) gespeichert und insbesondere durch Programmieren der Stellvorrichtung (12) veränderbar sind.

20. Sicherungssystem für Kraftfahrzeuge nach zumindest einem der vorhergehenden Ansprüche,
**dadurch gekennzeichnet, daß** die Stellvorrichtung (12) zur Erfassung von Betriebsstörungen, insbesondere von Unfällen, des Kraftfahrzeuges ausgebildet ist.

21. Sicherungssystem nach Anspruch 20,
**dadurch gekennzeichnet, daß** die Stellvorrichtung (12) zur Kommunikation mit einer Rückhalteeinrichtung, insbesondere mit einem Airbag-System (40), ausgelegt ist.

22. Sicherungssystem nach zumindest einem der vorhergehenden Ansprüche,
**dadurch gekennzeichnet, daß** die Stellvorrichtung (12) manuell aktivierbar ist.

## Claims

1. Cut-out system for the protection of electrical components (51) for motor vehicles connected to a current source (50), having at least one electrical conductor (10) and at least one actuating device (12) which has a controllable actuating unit (20) arranged in the region of the conductor (10) for interrupting the conductor (10) as a function of presettable operating states, the interrupted connection being capable of being restored, **characterised in that** the actuating unit (20) includes several actuating sections (52), and **in that** the conductor (10) includes several individual conductors (11) which can be interrupted independently of each other, each individual conductor (11) being assigned a contact element (14) and an actuating section (52) for actuating the contact element (14).

2. Cut-out system according to claim 1, **characterised in that** the connection can be interrupted and restored as often as desired.

3. Cut-out system according to claim 1 or 2, **characterised in that** the connection can be restored by means of the actuating device (12).

4. Cut-out system according to one or more of the preceding claims, **characterised in that** the conductor (10) includes at least one contact element (14) which is mounted movably, in particular slidable in the longitudinal direction of the conductor (10).

5. Cut-out system according to claim 4, **characterised in that** the contact element (14) is designed as a separate component that can be actuated with the actuating unit (20).

6. Cut-out system according to claim 4 or 5, **characterised in that** the conductor (10) includes at least two spaced-apart contact sections (15a, 15b) which can be bridged with the contact element (14).

7. Cut-out system according to one or more of claims 4 to 6, **characterised in that** the contact element is designed as a contact bush (14) that can be fitted over preferably approximately cylindrical contact sections (15a, 15b) of the conductor (10).

8. Cut-out system according to one or more of the preceding claims, **characterised in that** the conductor (10) is designed as a fuse.

9. Cut-out system according to one or more of the preceding claims, **characterised in that** the actuating unit (20) of the actuating device (12) includes at least one actuating section (52) which is rotatable about an axis of rotation running approximately perpendicularly to the conductor (10) for actuation of a contact element (14) of the conductor (10).

10. Cut-out system according to claim 9, **characterised in that** the actuating section is designed as a driver which is in particular provided in the form of a rocker finger (52) and which is non-rotatably connected to a drive shaft (54) and projects preferably approximately perpendicularly from the drive shaft (54).

11. Cut-out system according to claim 9 or 10, **characterised in that** the drive shaft (54) is rotatable via a gear mechanism (55, 57, 59), preferably a worm gear mechanism, by means of an electric motor (58).

12. Cut-out system according to one or more of the preceding claims, **characterised in that** the actuating unit (20) is provided with an automatic coupling function by which the force-fit connection to a contact element (14) can be interrupted on reaching its end positions.

13. Cut-out system according to one or more of claims 9 to 12, **characterised in that** several actuating sections (52) are arranged distributed along the axis of rotation and turned relative to each other about the axis of rotation, the angle of turning between two successive actuating sections (52) preferably being approximately 360°/n, where n is the number of individual conductors (11).

14. Cut-out system according to one or more of the preceding claims, **characterised in that** the conductor (10) is designed as a current distributor and includes several individual conductors (11) connected to at least one common main conductor (13), the main conductor (13) and the individual conductors (11) preferably being in each case designed at least substantially like strips.

15. Cut-out system according to one or more of the preceding claims, **characterised in that** the actuating device (12) includes a control unit (42) for detection of the operating states and for control of the actuating unit (20).

16. Cut-out system according to claim 15, **characterised in that** the control unit (42) is designed to transmit actuating signals generated as a function of the operating states to the actuating unit (20).

17. Cut-out system according to one or more of the preceding claims, **characterised in that** the actuating device (12) is designed for monitoring and in particular for detecting overload states of a conduction system containing the conductor (10).

18. Cut-out system according to one or more of the preceding claims, **characterised in that** the actuating device (12) is designed for monitoring currents flowing through the conductor (12) and/or the temperature of the conductor (10), in particular in the region of a predetermined point of separation.

19. Cut-out system according to one or more of the preceding claims, **characterised in that** the actuating device (12) can be activated as a function of values corresponding to presettable operating states and which are stored in the actuating device (12) and in particular are variable by programming the actuating device (12).

20. Cut-out system for motor vehicles according to one or more of the preceding claims, **characterised in that** the actuating device (12) is designed for the detection of operating faults, in particular accidents, of the motor vehicle.

21. Cut-out system according to claim 20, **characterised in that** the actuating device (12) is designed for communication with a restraint device, in particular with an airbag system (40).

22. Cut-out system according to one or more of the preceding claims, **characterised in that** the actuating device (12) can be activated manually.

## Revendications

1. Système de sécurité pour la protection de composants électriques (51) raccordés à une source de courant (50), pour des véhicules automobiles, comprenant au moins une ligne électrique (10) et au moins un dispositif de positionnement (12), lequel comprend une unité d'actionnement (20), susceptible d'être pilotée et agencée dans la zone de la ligne (10), pour interrompre la ligne (10) en fonction d'états de fonctionnement prédéterminés, la liaison interrompue pouvant être rétablie,
**caractérisé en ce que** l'unité d'actionnement (20) comprend plusieurs éléments d'actionnement (52), et
**en ce que** la ligne (10) comprend plusieurs conducteurs individuels (11) qui peuvent être interrompus indépendamment les uns des autres, un élément de contact (14) et un élément d'actionnement (52) pour actionner l'élément de contact (14) est associé à chaque conducteur individuel (11).

2. Système de sécurité selon la revendication 1,
**caractérisé en ce que** la liaison peut être interrompue et rétablie aussi souvent que voulu.

3. Système de sécurité selon la revendication 1 ou 2,
**caractérisé en ce que** la liaison peut être rétablie au moyen du dispositif de positionnement (12).

4. Système de sécurité selon l'une au moins des revendications précédentes,
**caractérisé en ce que** la ligne (10) comprend au moins un élément de contact (14) monté mobile, et en particulier déplaçable dans la direction longitudinale de la ligne (10).

5. Système de sécurité selon la revendication 4,
**caractérisé en ce que** l'élément de contact (14) est réalisé sous forme de composant séparé susceptible d'être actionné avec l'unité d'actionnement (20).

6. Système de sécurité selon la revendication 4 ou 5,
**caractérisé en ce que** la ligne (10) comprend deux tronçons de contact (15a, 15b) écartés l'un de l'autre, qui peuvent être connectés avec l'élément de contact (14).

7. Système de sécurité selon l'une au moins des revendications 4 à 6,
**caractérisé en ce que** l'élément de contact est réalisé sous forme de douilles de contact (14) susceptibles d'être enfilées sur des tronçons de contact (15a, 15b), de préférence approximativement cylindriques, de la ligne (10).

8. Système de sécurité selon l'une au moins des revendications précédentes,
**caractérisé en ce que** la ligne (10) est réalisée sous forme de fusible.

9. Système de sécurité selon l'une au moins des revendications précédentes,
**caractérisé en ce que** l'unité d'actionnement (20) du dispositif de positionnement (12) comprend au moins un tronçon d'actionnement (52) qui est capable de tourner autour d'un axe de rotation approximativement perpendiculaire à la ligne (10) pour l'actionnement d'un élément de contact (14) de la ligne (10).

10. Système de sécurité selon la revendication 9,
**caractérisé en ce que** le tronçon d'actionnement est réalisé comme un élément d'entraînement prévu en particulier sous la forme d'un levier traîné (52), lequel est relié solidairement en rotation à un arbre d'entraînement (54), et dépasse de préférence approximativement perpendiculairement de l'arbre d'entraînement (54).

11. Système de sécurité selon la revendication 9 ou 10,
**caractérisé en ce que** l'arbre d'entraînement (54) est susceptible d'être entraîné en rotation au moyen d'un moteur électrique (58) via un mécanisme à engrenages (55, 57, 59), de préférence à vis sans fin.

12. Système de sécurité selon l'une au moins des revendications précédentes,
**caractérisé en ce que** l'unité d'actionnement (20) est dotée d'une fonction d'embrayage automatique, par laquelle la liaison à coopération de forces vers un élément de contact (14) est susceptible d'être interrompue lorsque celui-ci atteint ses positions finales.

13. Système de sécurité selon l'une au moins des revendications 9 à 12,
**caractérisé en ce que** plusieurs éléments d'actionnement (52) sont agencés en répartition le long de l'axe de rotation et tournés les uns par rapport aux autres autour de l'axe de rotation, l'angle de rotation entre deux éléments d'actionnement successifs (52) s'élevant de préférence à environ 360°/n lorsque n est le nombre des conducteurs individuels (11).

14. Système de sécurité selon l'une au moins des revendications précédentes,
**caractérisé en ce que** la ligne (10) est réalisée sous forme de répartiteur de courant et comprend plusieurs conducteurs individuels (11) reliés à au moins un conducteur principal commun (13), dans lequel le conducteur principal (13) et les conducteurs individuels (11) sont de préférence réalisés respectivement au moins sensiblement en forme de rubans.

15. Système de sécurité selon l'une au moins des revendications précédentes,
**caractérisé en ce que** le dispositif de positionnement (12) comprend une unité de commande (42) pour la détection des états de fonctionnement et pour le pilotage de l'unité d'actionnement (20).

16. Système de sécurité selon la revendication 15,
**caractérisé en ce que** l'unité de commande (42) est réalisée pour la transmission, à l'unité d'actionnement (20), de signaux de positionnement générés en fonction des états de fonctionnement.

17. Système de sécurité selon l'une au moins des revendications précédentes,
**caractérisé en ce que** le dispositif de positionnement (12) est réalisé pour la surveillance et en particulier la reconnaissance d'états de surcharge d'un système de lignes qui contient la ligne (10).

18. Système de sécurité selon l'une au moins des revendications précédentes,
**caractérisé en ce que** le dispositif de positionnement (12) est réalisé pour la surveillance des courants qui traversent la ligne (10) et/ou la température de la ligne (10), en particulier dans la zone d'un emplacement de séparation prédéterminé.

19. Système de sécurité selon l'une au moins des revendications précédentes,
**caractérisé en ce que** le dispositif de positionnement (12) est susceptible d'être activé en fonction de valeurs correspondant à des états de fonctionnement prédéterminés, ces valeurs étant mémorisées dans le dispositif de positionnement (12) et modifiables, en particulier par programmation du dispositif de positionnement (12).

20. Système de sécurité pour véhicules automobiles selon l'une au moins des revendications précédentes,
**caractérisé en ce que** le dispositif de positionnement (12) est réalisé pour la détection de perturbations de fonctionnement, en particulier d'accidents, du véhicule automobile.

21. Système de sécurité selon la revendication 20,
**caractérisé en ce que** le dispositif de positionnement (12) est conçu pour la communication avec un système de retenue, en particulier avec un système à airbag (40).

22. Système de sécurité selon l'une au moins des revendications précédentes,
**caractérisé en ce que** le dispositif de positionnement (12) est susceptible d'être activé manuellement.
